Europäisches Patentamt

European Patent Office

Office européen des brevets

(19)

(11) Publication number: **0 045 224**
**B1**

(12)                          **EUROPEAN PATENT SPECIFICATION**

(45) Date of publication of patent specification: **26.02.86**

(51) Int. Cl.⁴: **G 06 F 15/353, G 06 F 15/20**

(21) Application number: **81303500.3**

(22) Date of filing: **30.07.81**

(54) **Interpolating means for image display.**

(30) Priority: **30.07.80 US 173874**

(43) Date of publication of application:
**03.02.82 Bulletin 82/05**

(45) Publication of the grant of the patent:
**26.02.86 Bulletin 86/09**

(84) Designated Contracting States:
**DE FR GB**

(56) References cited:
**FR-A-2 227 582**
**FR-A-2 278 310**
**GB-A-1 515 307**
**GB-A-2 010 545**
**US-A-4 144 570**

(73) Proprietor: **Biosound, Inc.**
**6405 Castleway Court**
**Indianapolis, Indiana 46250 (US)**

(72) Inventor: **Gessert, James M.**
**32114 Upper Bearcreek Road**
**Evergreen Colorado 80439 (US)**

(74) Representative: **Blatchford, William Michael**
**et al**
**Withers & Rogers 4 Dyer's Buildings Holborn**
**London EC1N 2JT (GB)**

## Description

The present invention relates to interpolating means for interpolating between successive units of digital data signals, and primarily to image display and recording means in non-incursive diagnostic apparatus.

In the art relating to diagnostics, especially in the field of medical diagnostics, means have been provided for examining the interior of a body by measuring the intensity of energy reflected from body members or transmitted through body members. One preferred form of such examination is by the use of ultrasonic pulse energy transmitted into the body member by a scanning transducer, with the sonic energy being reflected by elements within the body and received by the same or similar transducer. In the case of such an ultrasonic scanning system, the body portions examined comprise a fan shaped sector covering for example an angle of 30° to 75°. The reconstructed image, when displayed, also presents a representation covering the same angle. The display appears as an array of radial lines, with each line having portions of variable density depending upon the intensity of the reflected signal. It will be appreciated that the wider the scan of the transducer, the greater will be the separation between adjacent radial lines. The number of radial lines is a function of the pulse repetition rate of the initiating sonic pulse and the scan frequency of the transducer; a typical value is 100 radial lines per scan. While the discrete radial lines are adequate to convey the desired medical information to a trained observer, the gaps, or spaces, between the discrete lines present an undesirable image pattern which is difficult to read.

British Patent Specification No. 1 515 307 discloses an X-ray absorption scanner in which interpolation is carried out by determining the difference between successive values, and subdividing the difference values so obtained to produce a series of increments for adding to the measured values. This prior arrangement does not, however, provide interpolation means suitable for improving the image in the reflected energy system described above.

The present invention provides interpolating means for interpolating between successive units of significant digital data signals in a data stream consisting of units of significant digital data separated by unpredetermined numbers of data spaces, comprising: difference means for determining the difference between successive units of digital data; space counting means for determining the number of consecutive data spaces between successive units of significant digital data; division means for dividing the difference between successive units of digital data by the number of data spaces between those units to obtain corresponding fractions; incrementing means for sequentially incrementing successive units of digital data by the corresponding fractions; and means for introducing the incremented values in sequence between the units of significant digital data.

An embodiment of the present invention will now be described, by way of example, with reference to the accompanying drawings, in which:

Figure 1 is a block diagram of an image data display and recording system;

Figure 2 is a block diagram of the fill circuit of the system in Figure 1;

Figure 3 is a pictorial representation of an image produced without the benefit of the present invention, and

Figure 4 is a pictorial representation of an image produced using the present invention.

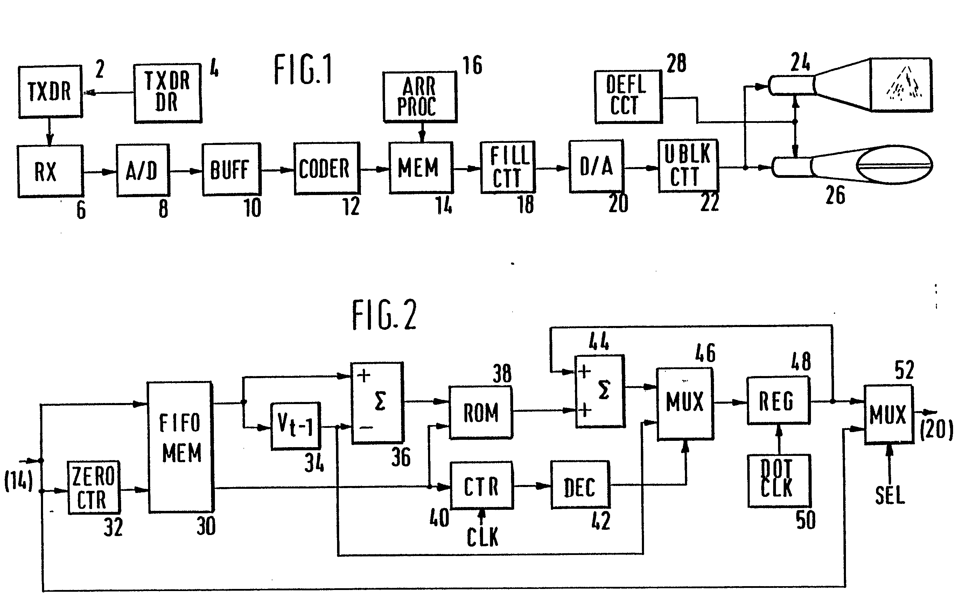

Referring to Figure 1, a transducer driver circuit 4 energizes a transducer 2 to produce a series of ultrasonic pulses which are radiated into the body to be examined. A portion of the pulse energy is returned to the transducer 2 by reflection from organic structures within the body under examination. The energy received by the transducer is converted to corresponding analog electrical signals which are received and amplified by a receiver 6. The amplified analog signals are converted to corresponding digital values by an analog-to-digital converter 8. The digital data corresponding to the analog signals is assembled in a buffer 10 and then passed through a coder 12 to be stored in an image memory 14. An array processor 16 associated with the image memory 14 is coordinated with the scanning angle of the transducer 2 and controls the addressing of the data into the image memory in a pattern to correspond to the scanning angle of the transducer. The stored data is then read from the · image memory 14 on a line-by-line, or raster scan basis and applied to the input of a fill or interpolation circuit 18, which can be switched into the circuit or bypassed. The digital data is then supplied to a digital-to-analog converter 20 where the digital values are reconverted to analog signals and applied as Z axis modulation to an unblanking circuit 22 for either or both of two CRT devices 24 and 26. A suitable deflection circuit 28 controls the deflection of the beam in each of the CRT's 24 and 26. In the case of the display CRT 24, the deflection circuit 28 controls the X and Y axis deflection of the beam, while in the recording CRT 26, it is essentially the X axis deflection that is controlled. The recording CRT is preferably of the type having a narrow band of fiber optic elements across the face plate thereof to define a recording area.

The display presented on the face of the CRT 24 will be in the form of a sector display corresponding to the angular scan of the transducer, with the analog signal apprearing as areas as variable density within the scan sector. A photosensitive recording medium will be moved at a predetermined speed past the face of the recording CRT 26. The resulting image on the recording medium would, again, be in the form of a sector display corresponding to the angular scan of the transducer 2 with the analog data appearing as areas of variable density within that scan sector.

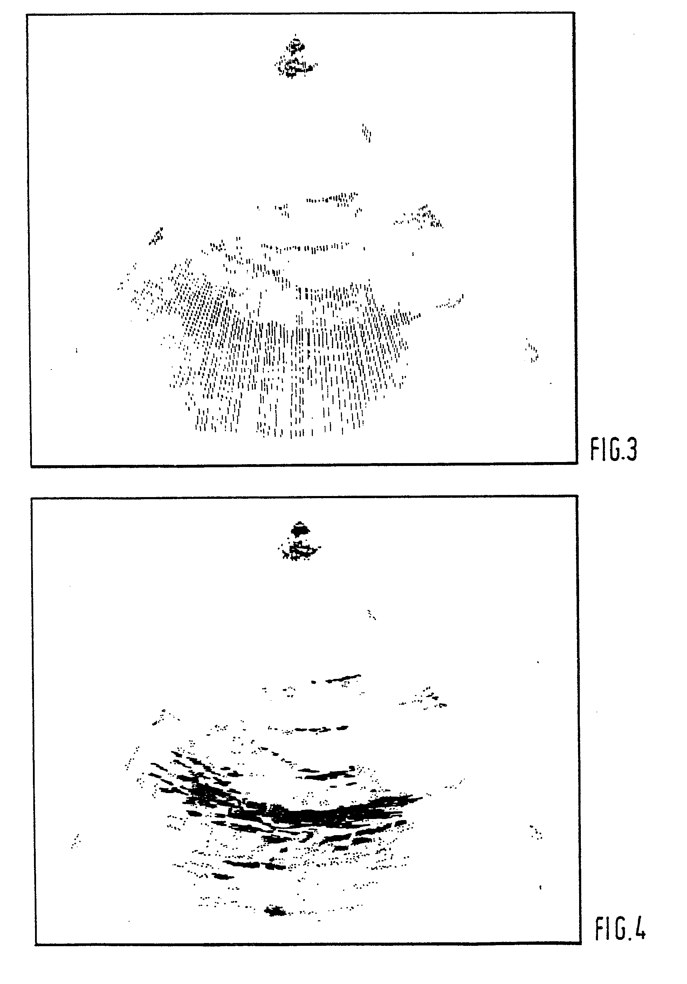

Without the use of the fill circuit, the image, appearing both on the display tube 24 and on a record made from the recording CRT 26, will be in the form of a succession of laterally disconnected dots arranged as an array of radial lines, as shown in Figure 3. On the other hand, when the fill circuit or interpolation circuit 18 is in use, the image on the face of the display CRT 24 and on the record formed from the recording CRT 26 will appear with the laterally disconnected dots now connected by interpolated shades of gray to produce a smoother image as shown in Figure 4. The image in Figure 3 appears as a number of radial lines each spaced from the next adjacent line, with the data appearing as variable density marks representing the individual data units. In Figure 4, however, there has been an interpolation of data between the distinct radial lines to fill in appropriate data to provide the smoother image pattern.

In the accomplishment of the interpolation, it is desirable that no interpolation or fill be spread into true zero areas, such, for example, as beyond the edges of the fan shaped sector. The A to D converter 8 converts the analog information into a four bit data words representing 16 shades of gray, or digital values from 0 to 15. In order to avoid spilling the interpolation over into the non-data portions of the display, i.e., beyond the edges of the fan shaped sector, the coder 12, in Figure 1, forces all of the 0's in the significant data stream to become 1's. This conversion, of course, applies only to the data received from the transducer and transmitted through the A to D converter to the coder 12. This arrangement provides for a positive distinction between image data and true zero or background data. Thus the data stored in the image memory 14 in the pattern of the fan shaped sector will have values ranging between 1 to 15 whereas the data surrounding the fan shaped image will be all 0's. Similarly, the memory data cells or pixels between the radial lines of data in the image memory will also be 0's or data spaces. The data stored in the image memory is read out in a line by line or raster scan and applied to the input of the fill circuit 18, as shown in Figure 1. The fill circuit 18 is shown in detail in Figure 2. The image memory 14 is scanned on a line by line basis. Before each cycle of data is loaded into the image memory, that memory is controlled to clear all addresses or pixels to 0. The data recieved from the A to D converter 8 through the buffer 10 and the coder 12 is loaded into the assigned addresses in the image memory 14 under the control of the array processor 16. As before noted, the data received from the transducer and converted by the A to D converter is limited by the coder 12 to a minimum value of 1 on a scale of 0 to 15 corresponding to the relative intensity of the signal received by the transducer.

The signals received by the transducer are serial strings of data arranged in a succession of spaced radial lines. The array processor 16 is arranged to store the received data in the image memory 14 in the pattern corresponding to those spaced radial lines. The minimum value for the signals in any of the spaced radial lines will be a value of 1 on a scale of 0 to 15. The pixels or data units in the memory between the spaced radial lines will contain 0's, as will the data lying beyond the two edges of the fan shaped data area. When that data is read out of the image memory 14 in a line-by-line scanning order, the number of 0 valued pixels between successive non-zero valued pixels is detected and counted by a zero data counter 32 and stored in the lower or zero count portion of a FIFO memory 30. The value of the data, on the scale of 0 to 15, read from the image memory is stored directly into the upper or gray data portion of the FIFO memory unit 30. The FIFO memory unit 30 is an asynchronous memory unit.

The zero count data is read from the FIFO unit 30 into a preset counter 40 while the gray data is read simultaneously into an old value register 34 and a summer 36. From the edge of the display to the beginning of the fan shaped array, the gray data will be all 0's. It has been found that in the radial line array of data, there will never be as many as eight successive 0's between any two non-zero pixels in the data display. Therefore any succession of 8 or more 0's is indicative of the presence of a true 0 value. The 8 or more 0's are recognized by the preset counter 40 and decoded by a decoder 22 to set a multiplexor 46 to read the older value, i.e., 0 from the register 34, bypassing the interpolation. When the far edge of the fan shaped display has been reached, there will again be a number of 0's in excess of 8 detected. Again the multiplexer will be actuated to read the last active data from the old value register 34 without interpolation to the 0 level. This will, of course, be followed by all 0's from the register 34.

In the portion of the image memory in which the significant data is stored, the successive data values on each scan line are subtracted in a summer 36 to provide a value equal to the difference in intensity between the two successive data points on the scan lines. The distance between those two data points is measured by the number of consecutive 0's counted by the zero data counter and transmitted through the FIFO 30. The objective of the interpolation system is to determine the magnitude of the difference between adjacent significant data bits, to divide that value by the distance between successive significant data cells or pixels to produce a fractional value, and to sum that fractional value with the last preceding value, so as to produce a graduated transition between actual measured values over the space between measured values.

To this end, when the leading edge of the fan shaped array is reached by the scanning of the image memory, the first significant value is transferred from the output of the old value register 34 into the multiplexor 46 and thence to a register 48. The difference between that old value and the next significant non-zero value is determined by the summer 36. The distance between successive non-zero values is determined by the zero data counter 32 and transmitted through the FIFO 30 to a ROM 38, which is also fed by the summer 36. The data stored in the ROM 38 is a table of fractional values representing possible gray scale values on a scale of 1 to 15 divided by zero count numbers of 1 to 8. The 1 to 8 divisors represents the actual count of zero plus 1, since the number of samples of fill the spaces between adjacent non-zero values is 1 less than the actual count number.

Accordingly, the difference signal from the summer 36 and the zero count number from the zero count portion of the FIFO memory unit 30 applied to the input of the ROM 38 together select a value, at an address determined by the two input signals, which is the value representative of the difference signal divided by the count number plus 1. That fractional value output from the ROM 38 is summed in a summer 44 with the previous value taken from the output of the register 48. The output of the summer 44 is then applied through the multiplexer 46 to the input of the register 48 where the value stored is now the previous value plus the fractional increment. That value is then applied through a multiplexer 52 to the digital-to-analog converter 20, and thence to the display and recording apparatus. The new value in the register 48 is now returned to the summer 44 where it is again summed with the increment and again returned to the register and applied through the multiplexor 52 to the digital-to-analog converter 20. This process is continued until the desired number of increments have been added and a new non-zero value is received from the gray data portion of the FIFO memory 30. In this manner, the values corresponding to differing shades of gray between adjacent non-zero values of the gray data received into the FIFO 30 are properly interpolated to provide a fill for the spaces between the radial lines of the image scan. These values are then clocked out of the register 48 by the dot clock 50 at a rate corresponding to the frequency of the individual dot elements on the CRT devices.

When the next non-zero value from the gray data portion of the FIFO memory 30 is received at the output thereof, the old value register is updated to store the last previous value and is then compared with the new value of the non-zero gray data. The interpolation process is then repeated for these two values and each successive pair of values across each line scan of the image memory. In this manner, the displayed or recorded image resulting from the interpolation presents a more readable and more esthetically pleasant image than the disconnected samples shown in Figure 3. If, for any reason, it is desired to not use the filled or interpolated image, a select signal is applied to the multiplexer 52 to transmit the data directly from the image memory to the digital-to-analog converter 20 and thence onto the image 2 to produce an image such as that shown in Figure 3.

## Claims

1. Interpolating means for interpolating between successive units of significant digital data signals in a data stream consisting of units of significant digital data separated by unpredetermined numbers of data spaces, comprising:

difference means (34, 36) for determining the difference between successive units of digital data;

space counting means (32) for determining the number of consecutive data spaces between successive units of significant digital data;

division means (38) for dividing the difference between successive units of digital data by the number of data spaces between those units to obtain corresponding fractions;

incrementing means (44, 46, 48) for sequentially incrementing successive units of digital data by the corresponding fractions; and

means (48, 50) for introducing the incremented values in sequence between the units of significant digital data.

2. Interpolating means according to claim 1, characterised in that the division means comprise an addressable store having stored therein a table of fractional values and addressable by the combination of the difference between successive units of significant data and the number of data spaces between those units.

3. Image display apparatus comprising:—
means (6) for receiving pulsed analog image signals:
an analog-to-digital converter (8) for converting the analog signals to digital signals;
memory means (14, 16) for storing the digital signals as significant signals in the memory means, with at least some of the significant signals being separated by a number of data spaces;
image display means (24, 26) on which the image is displayed by drive means (20, 22) fed from the memory means; and
the drive means including interpolating means according to either previous claim.

## Revendications

1. Moyens d'insertion destinés à l'interpolation entre des unités successives de signaux de données numériques significatives, dans un flot de données consistant en des unités de données numériques significatives séparées par des nombres non déterminés d'espaces de données, comprenant:

— des moyens de différence (34, 36) pour definir la différence entre des unités successives de données numériques,

— des moyens de comptage d'espace (32) pour définir le nombre d'espaces de données consécutives entre les unités successives de données numériques significatives;

— des moyens de division (38) pour diviser la différence entre les unités successives de données numériques par le nombre d'espaces de

7 **0 045 224** 8

données entre ces unités, pour obtenir les fractions correspondantes;

— des moyens d'incrémentation (44, 46, 48) pour incrémenter, séquentiellement, par fractions correspondantes, les unités successives de données numériques; et

— des moyens (48, 50) pour introduire les valeurs incrémentées en séquence entre les unités des données numériques significatives.

2. Moyens d'insertion selon la revendication 1, caractérisés en ce que les moyens de division comprennent une mémoire adressable ayant stocké une table de valeurs fractionnaires et adressable par la combinaison de la différence entre les unités successives de données significatives et le nombre d'espaces de données compris entre ces unités.

3. Appareil de visualisation d'images comprenant:

— des moyens (6) pour recevoir des signaux d'images analogiques modulés;

— un convertisseur (8) analogique-numérique pour convertir les signaux analogiques en signaux numériques;

— des moyens de mémoire (14, 16) pour stocker des signaux numériques tels que les signaux significatifs dans les moyens de mémoire, certains au moins des signaux significatifs étant séparés par un certain nombre d'espaces de données;

— des moyens de visualisation d'images (24, 26) sur lesquels l'image est visualisée par des moyens de commande (20, 22) alimentés par les moyens de mémoire; et

— les moyens de commande incluant des moyens d'insertion conformes à l'une ou l'autre des revendications précédentes.

**Patentansprüche**

1. Interpolierungseinrichtung zum Interpolieren zwischen sukzessiven Einheiten signifikanter digitaler Datensignale in einen Datenstrom, bestehend aus Einheiten signifikanter digitaler Daten, die durch nicht vorherbestimmte Zahlen von Datenzwischenräumen getrennt sind, umfassend:

eine Differenzeinrichtung (34, 36) zur Bestimmung der Differenz zwischen sukzessiven Einheiten digitaler Daten;

eine Zwischenraumzähleinrichtung (32) zum Bestimmen der Zahl aufeinanderfolgender Datenzwischenräume zwischen sukzessiven Einheiten signifikanter digitaler Daten;

eine Divisionseinrichtung (38) zum Dividieren der der Differenz zwischen sukzessiven Einheiten digitaler Daten durch die Zahl von Datenzwischenräumen zwischen jenen Einheiten, um entsprechende Bruchteile zu erhalten;

eine Inkrementiereinrichtung (44, 46, 48) zur sequentiellen Erhöhung sukzessiver Einheiten digitaler Daten um die entsprechenden Bruchteile; und

eine Einrichtung (48, 50) zur Einführung der erhöhten Werte der Reihe nach zwischen die Einheiten signifikanter digitaler Daten.

2. Interpoliereinrichtung nach Anspruch 1, dadurch gekennzeichnet, daß die Divisionseinrichtungen einen adressierbaren Speicher umfassen, in dem eine Tabelle von Bruchteilwerten gespeichert ist und der durch die Kombination der Differenz zwischen sukzessiven Einheiten signifikanter Daten und der Zahl von Datenzwischenräumen zwischen jenen Einheiten adressierbar ist.

3. Bilddarstellungsvorrichtung, umfassend:

eine Einrichtung (6) zum Aufnehmen gepulster Analogbildsignale;

einen Analog/Digitalwandler (8) zum Umwandeln der analogen Signale in digitale Signale;

eine Speichereinrichtung (14, 16) zum Speichern der digitalen Signale als signifikante Signale in der Speichereinrichtung, wobei zumindest einige der signifikanten Signale um eine Zahl von Datenzwischenräumen getrennt sind;

eine Bilddarstellungseinrichtung (24, 26), auf der das Bild durch eine Ansteuerungseinrichtung (20, 22), von der Speichereinrichtung gespeist, dargestellt wird;

wobei die Ansteuerungseinrichtung eine Interpoliereinrichtung gemäß einem beliebigen vorhergehenden Anspruch enthält.

0 045.224

## FIG.1

TXDR 2

TXDR DR 4

ARR PROC 16

DEFL CCT 28

24

RX 6 → A/D 8 → BUFF 10 → CODER 12 → MEM 14 → FILL CTT 18 → D/A 20 → UBLK CTT 22

26

## FIG.2

FIFO MEM 30

ZERO CTR 32

$V_{t-1}$ 34

+ − Σ 36

ROM 38

CTR 40

CLK

DEC 42

+ + Σ 44

MUX 46

REG 48

DOT CLK 50

MUX 52

(14)

(20)

SEL

FIG.3

FIG.4